# EUROPEAN PATENT APPLICATION

(11) **EP 3 499 842 A1**
(43) Date of publication of application: **19.06.2019**
(21) Application number: 17210855.7
(22) Date of filing: 28.12.2017
(51) Int. Cl.: H04L 29/08, G06F 9/50, H04W 4/70

(54) **CALCULATION CAPABILITY DESCRIPTION METHOD, INTERACTION METHOD AND DEVICE FOR FOG COMPUTING**

(30) Priority: 18.12.2017 CN 201711369417
(71) Applicant: Shanghai Research Center For Wireless Communications, Shanghai City 201210 (CN)
(72) Inventor: ZHANG, Meng-ying, Shanghai City, Shanghai 201210 (CN); ZHOU, Ming-tuo, Shanghai City, Shanghai 201210 (CN); YANG, Yang, Shanghai City, Shanghai 201210 (CN); WANG, Hai-feng, Shanghai City, Shanghai 201210 (CN)
(74) Representative: dompatent von Kreisler Selting Werner - Partnerschaft von Patent- und Rechtsanwälten mbB

(57) **Abstract**

The present invention discloses a fog computing-oriented method for describing a node computing capability and a fog computing-oriented method for exchanging a node computing capability, and further discloses a fog computing-oriented node device. In the present invention, key parameters affecting a computing capability are further explored, and therefore, a computing capability of a node can be described more accurately. After these key parameters are obtained, a computing type and a scale of data that are suitable for being processed by the node can be better determined, and a delay and costs that are needed by the node to execute a computing task can be better preestimated, so as to further assist in computing task allocation between nodes.

## Description

### BACKGROUND

### Technical Field

The present invention belongs to the field of computing and communications technologies, and relates to a fog computing-oriented method for describing a node computing capability and a fog computing-oriented method for exchanging a node computing capability, and further, to a fog computing-oriented node device.

### Related Art

With the continuous evolution of network architectures, advanced distributed computing concepts such as cloud computing and fog computing are successively proposed to meet explosively increasing data traffic requirements and the challenge of low-delay services. Cloud computing integrates storage, control, and processing capabilities in a powerful cloud server, and utilizes centralized data processing and resource management, improving the resource utilization efficiency and the energy efficiency of networks. However, delays in data transmission and processing inevitably occur when services are provided by means of remote access to cloud servers, and are unacceptable for Internet of Things applications (such as automated driving) that have very high delay requirements.

Furthermore, with the rapid development of Internet of Things applications, a quantity of network connections and generated data traffic are increasing at an exponential speed. If all data is transferred to cloud servers for processing, this causes extremely heavy load to communications networks. To overcome delay issues and limitations on network bandwidth of cloud computing, Cisco Systems Inc. (USA) has launched a computing mode of fog computing. Nearly all data, data processing, and application programs are not stored on a cloud server, but instead are integrated in a network edge device in the computing mode.

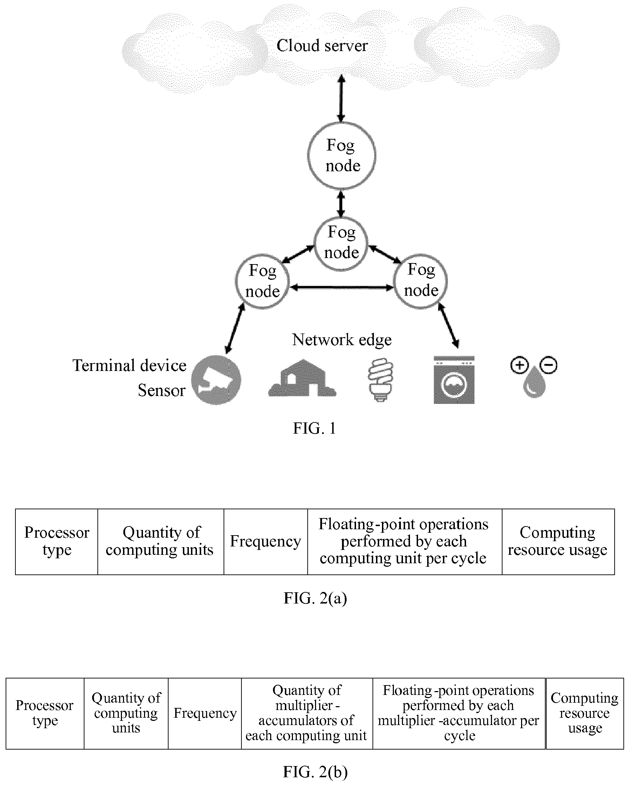

As shown in FIG. 1, fog computing utilizes computing, storage, communication, management, and other functions of a cloud server, a network edge devices, and terminal devices, to form a continuous service area from the cloud server to the terminal devices. The network edge devices may be conventional network devices such as routers, switches, and gateways that have already been deployed in a network, or may be dedicatedly deployed local servers, which are collectively referred to as fog nodes (which are referred to as nodes for short below).

In fog computing, various resources in the continuous service area are flexibly allocated and managed, so as to efficiently and intelligently provide services to users in a plurality of vertical industries and application fields, thereby lightening the load on the communications networks, reducing transmission and computing delays, and improving the resource utilization efficiency and the energy efficiency.

Different from a centralized management architecture of cloud computing, a heterogeneous hierarchical architecture used in fog computing is more complex. How to efficiently exchange computing capability information and allocate a computing task between network nodes having different capabilities directly affects the performance such as a delay, a capacity, and the resource utilization efficiency of the entire communications network. Therefore, a critical problem that urgently needs to be resolved in the prior art is to design a suitable and effective method for describing a node computing capability and a suitable and effective information exchange method of the node computing capability.

### SUMMARY

A first technical problem to be resolved in the present invention is to provide a fog computing-oriented method for describing a node computing capability.

Another technical problem to be resolved in the present invention is to provide a fog computing-oriented method for exchanging a node computing capability.

Still another technical problem to be resolved in the present invention is to provide a fog computing-oriented node device.

To achieve the foregoing inventive objectives, the following technical solutions are used in the present invention:

According to a first aspect of embodiments of the present invention, a fog computing-oriented method for describing a node computing capability is provided, and a node computing capability is described by using the following information:
first information is a processor type;
second information is a quantity of computing units;
third information is a frequency; and
fourth information is floating-point operations performed by each computing unit per cycle.

Preferably, the fourth information includes information about a quantity of multiplier-accumulators of each computing unit and information about floating-point operations performed by each multiplier-accumulator per cycle.

Preferably, when the processor type is a central processing unit (CPU), the quantity of computing units is a quantity of CPU cores, and a quantity of multiplier-accumulators is a quantity of fused multiply-adds (FMAs);
when the processor type is a graphics processing unit (GPU), the quantity of computing units is a quantity of stream processors, and a quantity of multiplier-accumulators is a quantity of multiplication and addition units;
when the processor type is a field programmable gate array (FPGA) or an application-specific integrated circuit (ASIC), the quantity of computing units is a quantity of digital signal processing units, and a quantity of multiplier-accumulators is a quantity of multiplication and addition units; or
when the processor type is a digital signal processor (DSP), the quantity of computing units is a quantity of DSP cores, and a quantity of multiplier-accumulators is quantities of summators and multipliers.

According to a second aspect of the embodiments of the present invention, a fog computing-oriented method for exchanging a node computing capability is provided.

When a fog computing system has a centralized system architecture and includes a plurality of low layer nodes and at least one high layer management node,
the low layer node sends information about a node computing capability to the high layer management node or another one of the low layer nodes, and
the high layer management node receives the information about the node computing capability, and computes a computing capability of the low layer node according to the information about the node computing capability, so as to allocate a computing task; or
when a fog computing system has a distributed system architecture and includes only a plurality of nodes located at a same logical layer, the nodes exchange corresponding information about a node computing capability in a request-response manner or in a broadcast manner, so as to allocate a computing task.

Preferably, the information about the node computing capability includes: a processor type, a quantity of computing units, a frequency, and floating-point operations performed by each computing unit per cycle.

Preferably, the high layer management node multiplies the quantity of computing units and the frequency of each processor, and the floating-point operations performed by each computing unit per cycle, to obtain peak floating-point operations of the processor.

Preferably, the floating-point operations performed by each computing unit per cycle include information about a quantity of multiplier-accumulators of each computing unit and information about floating-point operations performed by each multiplier-accumulator per cycle.

Preferably, the low layer node broadcasts the information about the node computing capability to a low layer node that is located at a same logical layer as the low layer node.

According to a third aspect of the embodiments of the present invention, a fog computing-oriented node device is provided, including a processor and a memory. The processor reads a computer program in the memory, to perform the following operations:
reading information about a node computing capability that is from another node device, where the information about the node computing capability includes: a processor type, a quantity of computing units, a frequency, and floating-point operations performed by each computing unit per cycle;
combining the quantity of computing units and the frequency of each processor, and the floating-point operations performed by each computing unit per cycle, into the node computing capability of the another node device; and
correspondingly storing the node computing capability and an identifier (ID) of the another node device.

Preferably, the information about the node computing capability further includes computing resource usage, and
the node device combines the quantity of computing units and the frequency of each processor, the floating-point operations performed by each computing unit per cycle, and the computing resource usage, into the node computing capability of the another node device.

Preferably, the node device obtains the information about the node computing capability of the another node device in a request-response manner.

Alternatively, the node device obtains the information about the node computing capability of the another node device in a broadcast manner.

Compared with the prior art, in the present invention, key parameters affecting a computing capability are further explored, and therefore, a computing capability of a node can be described more accurately. After these key parameters are obtained, a computing type and a scale of data that are suitable for being processed by the node can be better determined, and a delay and costs that are needed by the node to execute a computing task can be better pre-estimated, so as to further assist in computing task allocation between nodes. The present invention is especially applicable to a heterogeneous hierarchical architecture of fog computing, and is expected to be further standardized.

### BRIEF DESCRIPTION OF THE DRAWINGS

FIG. 1 is an exemplary diagram of a network deployment scenario of fog computing;
FIG. 2(a) and FIG. 2(b) are two examples of information content representing a node computing capability;
FIG. 3 is an exemplary diagram of a centralized system architecture used in fog computing;
FIG. 4(a) and FIG. 4(b) are flowcharts of two information exchange processes based on a centralized system architecture;
FIG. 5 is an exemplary diagram of a distributed system architecture used in fog computing;
FIG. 6(a) and FIG. 6(b) are flowcharts of two information exchange processes based on a distributed system architecture;
FIG. 7 is a schematic diagram of a hierarchical heterogeneous fog computing architecture according to an embodiment of the present invention;
FIG. 8 is an exemplary diagram of content of computing capability information of a node 1 in the embodiment shown in FIG. 7;
FIG. 9 is an exemplary diagram of content of computing capability information of a node 2 in the embodiment shown in FIG. 7;
FIG. 10 is an exemplary diagram of content of computing capability information of a node 3 in the embodiment shown in FIG. 7; and
FIG. 11 is an exemplary diagram of a structure of a node device participating in fog computing.

### DETAILED DESCRIPTION

The following specifically describes technical content of the present invention in detail with reference to the accompanying drawings and specific embodiments.

In fog computing, computing resources are open to undirected users accessing a local network, and a person applies for and uses a computing resource, improving the resource utilization through sharing, and improving the reliability of an entire communications network in a redundant manner. Therefore, it is a very important foundational work for a user (that is, a node participating in fog computing) to accurately describe and share computing capability information of the user.

A communication interface document of control and management planes (OpenFog Interface CWG-001, Communication Interface: Control and Management Planes, May 2017) that is issued by the OpenFog Consortium proposes to implement service discovery between nodes by using the existing Simple Service Discovery Protocol (SSDP). The SSDP protocol is apart of the Universal Plug and Play (UPnP) protocol, and provides a service discovery mechanism in a local area network. A client may query, according to a requirement and by using the SSDP protocol, a device that provides a particular service (for example, having a clock service) in a local area network in which the client is located. Alternatively, a device that provides a service may declare, by using the SSDP protocol, its presence to a control point in a local area network in which the device is located. However, the SSDP protocol provides neither a manner of describing a node computing capability nor a corresponding manner of exchanging computing capability information.

In view of the foregoing problem, by fully considering the diversity of processors participating in fog computing, the present invention provides a general method for describing a computing capability of a processor. In a fog computing system, node devices having different computing capabilities need to be fully utilized. In addition to common memories such as a static random-access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic disk, and an optical disc, the different node devices may further include processors having different features and advantages, for example, a CPU, a GPU, an FPGA, an ASIC, and a DSP chip. A memory is used to store an executable instruction of a processor. The following briefly describes different types of processors.
- The CPU is a super-large scale integrated circuit, and mainly includes an arithmetic logic unit (ALU), a control unit, a cache, and a dynamic random-access memory (DRAM), and data, control, and state buses for implementing their relations. The CPU serves as a general purpose processor, and balances computing and control. 70% of transistors of the CPU are used to construct memories and control units, so as to process a complex logic and improve the instruction execution efficiency. In fact, computing units ALU occupy only a relatively small part of a CPU structure. Therefore, the CPU has high universality of computing and can process computing with high complexity, but computing performance is ordinary.
- The GPU is efficient in performing parallel computing similar to image processing. The GPU can provide a large quantity of computing units (up to thousands of computing units) and a large quantity of high speed memories, and can process a large amount of data in parallel. Transistors in the GPU are mostly used for computing units, and a logic control unit of the GPU is simpler than that of the CPU. One logic control unit corresponds to a plurality of computing units. Therefore, if the computing units are expected to be fully utilized in parallel, a processing algorithm inevitably needs to have relatively low complexity, and data to be processed needs to be independent of each other. In this way, computing capability of the GPU can be fully utilized.
- The FPGA serves as a high-performance and low-power-consumption programmable chip, may customize a special algorithm design for a customer, and may be re-programmable. A difference between the FPGA and the CPU lies in that the FPGA cannot execute an instruction that has not been programmed. Once a programming manner is determined, the FPGA needs to process particular data input according to programmed processing logic and manners. However, in such an architecture, nearly all units inside the FPGA are computing units. Therefore, an actual computing capability of the FPGA is very high, especially when a simple but highly repeated task is run. In addition, because a fetching step and a decoding step of the CPU are omitted, the efficiency of repeatedly running same code by the FPGA is greatly improved.
- The ASIC is a chip that is specially customized for a particular requirement. A structure of the ASIC is relatively similar to that of the FPGA, but the ASIC is an application-specific integrated circuit. Once the ASIC is designed and manufactured, the circuit is fixed and can no longer be changed. A longer time is needed to specifically design the ASIC to satisfy different application requirements, and compared with a common chip, the ASIC has advantages such as a small volume, low power consumption, high computing performance, high computing efficiency, and lower costs with higher chip output.
- The DSP chip is a chip that can implement a digital signal processing technology. A Harvard architecture in which programs and data are separated is used inside the DSP chip, and the DSP chip has a hardware multiplier and a multifunctional computing unit. Pipeline operations are widely used to provide special DSP instructions for rapidly implementing various digital signal processing algorithms.

In the prior art, a common computing performance estimation index is floating-point operations per second (FLOPS). According to the IEEE 754 standard, floating-point operations refer to single precision (32-bit) or double precision (64-bit) addition or multiplication. In the industry, performance of different processors is usually estimated by using peak FLOPS, which represent a theoretical computing capability limit of a processor. However, in the present invention, considering that it is very difficult to reach the peak FLOPS in practice, a computing capability of a processor cannot be accurately described by using only this index. Therefore, in the present invention, a computing capability of a node is further comprehensively and accurately described by using a plurality of key parameters such as a processor type, a quantity of computing units and a frequency of each processor, floating-point operations performed by each computing unit per cycle, a quantity of multiplication and addition units included in each computing unit, floating-point operations performed by each multiplication and addition unit per cycle, and computing resource usage of the processor. After these key parameters are obtained, a computing type and a scale of data that are suitable for being processed by the node can be better determined, and a delay and costs that are needed by the node to execute a computing task can be better pre-estimated, so as to further assist in computing task allocation between nodes.

Based on the foregoing concept, the present invention first provides a fog computing-oriented method for describing a node computing capability (which is referred to as a description method for short). In the description method, a computing capability limit of a node participating in fog computing is first determined. In an embodiment of the present invention, a computing capability limit of a node is determined by using parameters such as a processor type, a quantity of computing units and a frequency of each processor, floating-point operations performed by each computing unit per cycle, a quantity of multiplication and addition units included in each computing unit, and floating-point operations performed by each multiplication and addition unit per cycle. The computing capability limit described by using these parameters means that the node theoretically can provide such a computing capability at most, and there is no potential for further exploration. Then, a computing capability usage status of the node participating in fog computing is further determined. In this embodiment of the present invention, the computing capability usage status mainly refers to computing resource usage of a processor, and may also include a quantity of computing units participating in a computing task or a working frequency of a computing unit (if a working frequency of the processor is adjustable) or the like. By using the computing capability usage status parameter, the potential of the node participating in fog computing for accepting a new computing task can be determined. In practice, a node computing capability is not static but is dynamically adjustable. Therefore, for some nodes that are processing a partial computing task but still have a partial computing capability to accept a new task, the foregoing computing capability usage status is a very important determining basis.

In different embodiments of the present invention, there are two options for describing information content of the node computing capability, as shown in FIG. 2(a) and 2(b). In FIG. 2(a), the processor type includes, but is not limited to, a CPU, a GPU, an FPGA, an ASIC, and a DSP. For the CPU, the quantity of computing units is a quantity of CPU cores. For the GPU, the quantity of computing units is a quantity of stream processors. For the FPGA and the ASIC, the quantity of computing units is a quantity of digital signal processing units. For the DSP, the quantity of computing units is a quantity of DSP cores. By multiplying the quantity of computing units and the frequency of each processor, and the floating-point operations performed by each computing unit per cycle, peak FLOPS of the processor can be derived.

In FIG. 2(b), the processor type includes, but is not limited to, a CPU, a GPU, an FPGA, an ASIC, and a DSP. For the CPU, the quantity of computing units is a quantity of CPU cores, and a quantity of multiplier-accumulators is a quantity of FMAs. For the GPU, the quantity of computing units is a quantity of stream processors, and a quantity of multiplier-accumulators is a quantity of multiplication and addition units. For the FPGA and the ASIC, the quantity of computing units is a quantity of digital signal processing units, and a quantity of multiplier-accumulators is a quantity of multiplication and addition units. For the DSP, the quantity of computing units is a quantity of DSP cores, and a quantity of multiplier-accumulators is quantities of summators and multipliers. By multiplying a quantity of multiplier-accumulators of each computing unit and floating-point operations performed by each multiplier-accumulator per cycle, the floating-point operations performed by each computing unit per cycle can be obtained. By multiplying the quantity of computing units and the frequency of each processor, the floating-point operations performed by each computing unit per cycle, a quantity of multiplier-accumulators of each computing unit, and floating-point operations performed by each multiplier-accumulator per cycle, peak FLOPS of the processor can also be derived.

Alternatively, in addition to the foregoing key parameters, other parameters affecting the node computing capability may be included in the information content for describing the node computing capability. These parameters include, but are not limited to, communication capability information (such as an access technology or a bandwidth used by the node, or an average data rate) of the node, and storage capability information of the node (such as the size of a storage space or an access speed of the node). The information content may be transmitted as a payload of a data packet. It should be noted that, a packet that carries information about the node computing capability should include an ID of the node, but the ID of the node may not be put in the payload of the data packet (that is, placed together with the information about the node computing capability), and may be put in a packet header or another part.

When the node starts working, computing capability-related information of the node should be obtained, and includes the processor type, the quantity of computing units and the frequency of each processor, the floating-point operations performed by each computing unit per cycle, and the like. The computing resource usage dynamically changes, and may be obtained periodically or by using an event trigger (for example, when a high layer management node requests to obtain the computing capability of the node). Each node should have a capability of obtaining the foregoing computing capability-related information. If some nodes do not have a capability of obtaining or testing the information, the related information may be stored on a node by means of manual configuration, and the information is sent to another node when needed.

By means of the foregoing method for describing a node computing capability, the computing capability of the node participating in fog computing can be described more accurately. After the key parameters representing the computing capability are obtained, a computing type and a scale of data that are suitable for being processed by the node can be better determined, and a delay and costs that are needed by the node to execute a computing task can be better pre-estimated, so as to further assist in computing task allocation between nodes.

Based on the foregoing method for describing a node computing capability, the present invention further provides a fog computing-oriented method for exchanging a node computing capability, to exchange computing capability information between heterogeneous nodes, and assist in computing task allocation between the nodes. According to different features of a centralized system architecture and a distributed system architecture used in fog computing, the foregoing method for exchanging a node computing capability may specifically include two implementations, and be specifically described in the following:

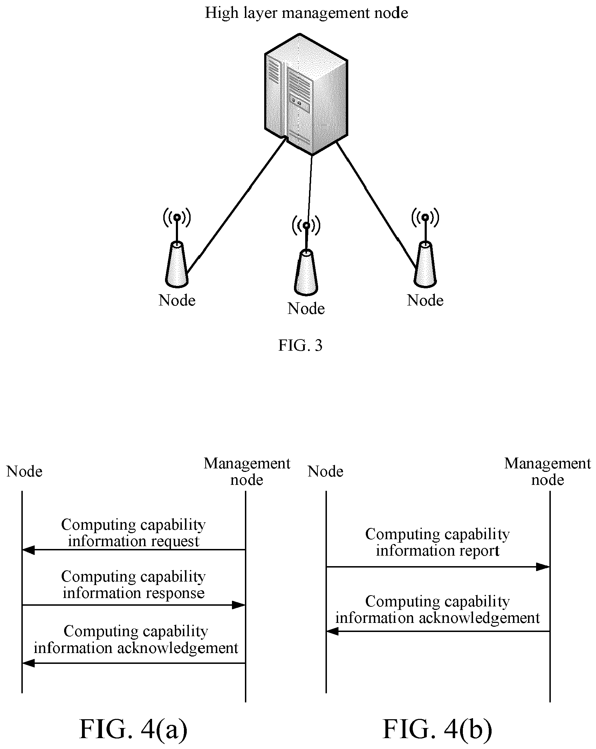

FIG. 3 is an exemplary diagram of a centralized system architecture used in fog computing. In the centralized system architecture, each node located at a low layer may report its computing capability information to a high layer management node, and the high layer management node receives the computing capability information that is from the low layer node, and allocates a computing task by using the computing capability information. It should be noted that, hierarchy in the present invention is logical hierarchy, and the hierarchy is not necessarily organized according to a physical network topology. Therefore, the high layer management node is a management node that is responsible for managing and coordinating other nodes in a specific area, and is not necessarily located at a highest layer in a physical structure of the network topology. Similarly, the low layer node is not necessarily located at a lower layer in the physical structure of the network topology. In different embodiments of the present invention, an information exchange process based on the centralized system architecture is specifically implemented in two manners, as shown in FIG. 4(a) and FIG. 4(b).

In FIG. 4(a), the high layer management node requests to obtain the computing capability information of the low layer node, and the following steps are specifically included:
Step 1: The high layer management node sends "computing capability information request" signaling to the low layer node.
Step 2: After receiving the signaling, the low layer node feeds back a "computing capability information response" to the high layer management node, where the "computing capability information response" includes the computing capability information of the node, which includes, but is not limited to, a processor type, a quantity of computing units and a frequency of each processor, and floating-point operations performed by each computing unit per cycle, or a quantity of multiplication and addition units included in each computing unit, floating-point operations performed by each multiplication and addition unit per cycle, and computing resource usage of the processor.
Step 3: After receiving the computing capability information of the low layer node, the high layer management node sends "computing capability information acknowledgement" signaling to the low layer node.

In FIG. 4(b), after establishing a communications interface with the high layer management node, the low layer node actively sends the computing capability information of the low layer node to the high layer management node, and the following steps are specifically included:
Step 1: The low layer node sends a "computing capability information report" to the high layer management node, where the "computing capability information report" includes the computing capability information of the node, which includes, but is not limited to, a processor type, a quantity of computing units and a frequency of each processor, and floating-point operations performed by each computing unit per cycle, or a quantity of multiplication and addition units included in each computing unit, floating-point operations performed by each multiplication and addition unit per cycle, and computing resource usage of the processor.
Step 2: After receiving the computing capability information of the low layer node, the high layer management node sends "computing capability information acknowledgement" signaling to the low layer node.

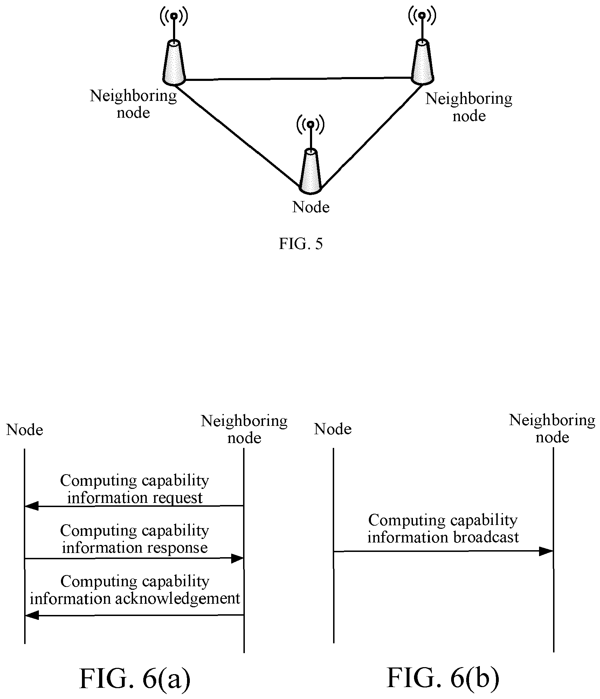

FIG. 5 is an exemplary diagram of a distributed system architecture used in fog computing. In the distributed system architecture, a node may inform a neighboring node of its computing capability information, to coordinate a distributed computing task between a plurality of nodes. In different embodiments of the present invention, an information exchange process based on the distributed system architecture is specifically implemented in two manners, as shown in FIG. 6(a) and FIG. 6(b).

In FIG. 6(a), the neighboring node requests to obtain the computing capability information of this node, and the following steps are specifically included:
Step 1: The neighboring node sends "computing capability information request" signaling to this node.
Step 2: After receiving the signaling, this node feeds back a "computing capability information response" to the neighboring node, where the "computing capability information response" includes the computing capability information of the node, which includes, but is not limited to, a processor type, a quantity of computing units and a frequency of each processor, and floating-point operations performed by each computing unit per cycle, or a quantity of multiplication and addition units included in each computing unit, floating-point operations performed by each multiplication and addition unit per cycle, and computing resource usage of the processor.
Step 3: After receiving the computing capability information of this node, the neighboring node sends "computing capability information acknowledgement" signaling to this node.

In FIG. 6(b), after establishing a communications interface with the neighboring node, this node actively broadcasts a "computing capability information report" to the neighboring node, where the "computing capability information report" includes the computing capability information of the node, which includes, but is not limited to, a processor type, a quantity of computing units and a frequency of each processor, and floating-point operations performed by each computing unit per cycle, or a quantity of multiplication and addition units included in each computing unit, floating-point operations performed by each multiplication and addition unit per cycle, and computing resource usage of the processor. Because a broadcast manner is used, the neighboring node may not need to feed back "computing capability information acknowledgement" signaling to this node.

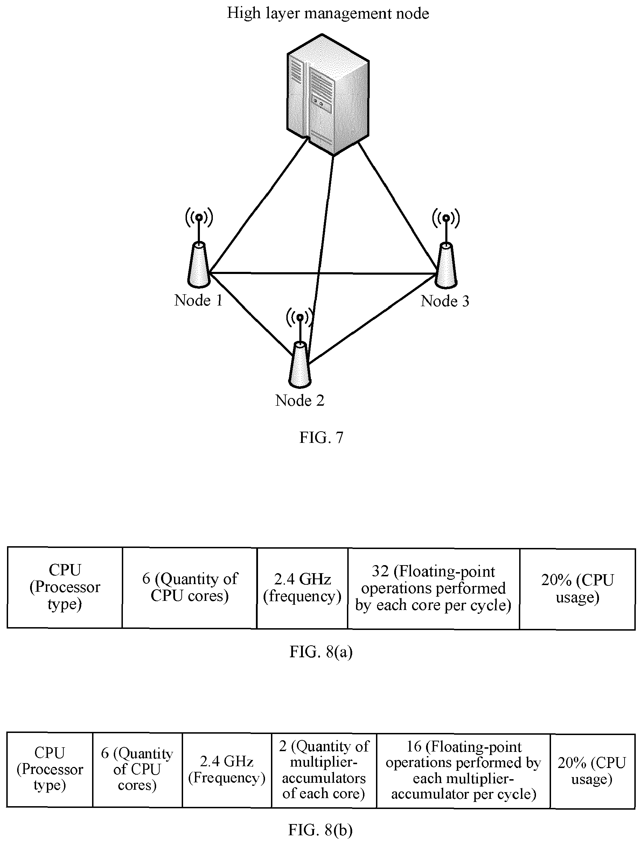

FIG. 7 shows a hierarchical heterogeneous fog computing architecture according to an embodiment of the present invention. The hierarchical heterogeneous fog computing architecture includes a high layer management node and three low layer nodes. The nodes include different processors such as a CPU, a GPU, an FPGA, an ASIC, or a DSP, and may communicate with each other and exchange computing capability information. In the hierarchical heterogeneous fog computing architecture, the high layer management node may obtain computing capability information of a low layer node by using two implementations. Details are described in the following:
In a first implementation, the high layer management node requests to obtain computing capability information of a low layer node 1, and the following steps are specifically included:
   Step 1: The high layer management node sends "computing capability information request" signaling to the node 1.
   Step 2: After receiving the signaling, the node 1 feeds back a "computing capability information response" to the high layer management node, where the "computing capability information response" includes the computing capability information of the node 1. Assuming that a processor type of the node 1 is the CPU, a quantity of the CPU cores is 6, a frequency of the CPU is 2.4 GHz, each CPU core has two FMAs, floating-point operations performed by each FMA per cycle are 16, and CPU usage is 20%, content of the computing capability information sent by the node 1 is shown in FIG. 8(a) or 8(b).
   Step 3: After receiving the computing capability information of the node 1, the high layer management node sends "computing capability information acknowledgement" signaling to the node 1.

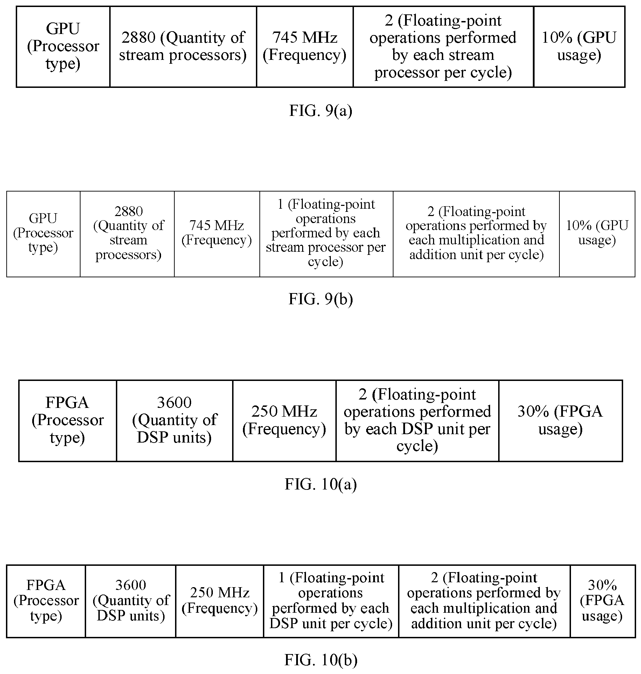

In a second implementation, after establishing a communications interface, a node 2 actively sends computing capability information of the node 2 to the high layer management node, and the following steps are specifically included:
Step 1: The node 2 sends a "computing capability information report" to the high layer management node, where the "computing capability information report" includes the computing capability information of the node 2. Assuming that a processor type of the node 2 is the GPU, a quantity of stream processors is 2880, a frequency of the GPU frequency is 745 MHz, each stream processor has one multiplication and addition unit, floating-point operations performed by each multiplication and addition unit per cycle is 2, and GPU usage is 10%, content of the computing capability information sent by the node 2 is shown in FIG. 9(a) or 9(b).
Step 2: After receiving the computing capability information of the node 2, the high layer management node sends "computing capability information acknowledgement" signaling to the node 2.

In the hierarchical heterogeneous fog computing architecture shown in FIG. 7, nodes 1, 2, and 3 that are located at a same logical layer of a network may exchange computing capability information by using the two implementation methods shown in FIG. 6(a) and 6(b).

In a first implementation, the node 2 requests to obtain computing capability information of the node 1, and the following steps are specifically included:
Step 1: The node 2 sends "computing capability information request" signaling to the node 1.
Step 2: After receiving the signaling, the node 1 feeds back a "computing capability information response" to the node 2, where the "computing capability information response" includes the computing capability information of the node 1 and content of the information is shown in FIG. 8(a) or 8(b).
Step 3: After receiving the computing capability information of the node 1, the node 2 sends "computing capability information acknowledgement" signaling to the node 1.

In a second implementation, after establishing a communications interface with the node 1 and the node 2, the node 3 actively broadcasts a "computing capability information report" to the node 1 and the node 2, where the "computing capability information report" includes computing capability information of the node 3. Assuming that a processor type of the node 3 is the FPGA, a quantity of digital signal processing units is 3600, a frequency of the FPGA is 250 MHz, each DSP unit has one multiplication and addition unit, floating-point operations performed by each multiplication and addition unit per cycle is 2, and FPGA usage is 30%, content of the computing capability information sent by the node 3 is shown in FIG. 10(a) or 10(b).

Because a broadcast manner is used, neither the node 1 nor the node 2 needs to feed back "computing capability information acknowledgement" signaling to the node 3.

In an embodiment of the present invention, a node may send computing capability information to all neighboring nodes that have established a communications interface with the node, or send information to some neighboring nodes according to a specific filtering rule (such as IP address filtering).

When a node joins in a fog computing system for the first time, after the node establishes a communications interface with a high layer management node of the network, the node may actively report its computing capability information to the high layer management node. Alternatively, when a high layer management node actively requests to obtain computing capability information of a low layer node, the node reports its computing capability information.

The high layer management node may form a list of computing capability information of nodes, and stores the list in a memory of the high layer management node. The list includes computing capability information of each low layer node managed by the high layer management node. The information may be processed or combined to be used to allocate a computing task. How to process or combine the information may be determined according to a specific implementation. Whether the high layer management node needs to report the information to a node at a higher layer should also be determined according to a specific network topology and coordination policy.

In a distributed system architecture, a node may send computing capability information to all neighboring nodes that have established a communications interface with the node, or send information to some neighboring nodes according to a specific filtering rule (such as IP address filtering). The UDP or the TCP may be selected according to a specific implementation. Because a processor type, a quantity of computing units, a frequency, and other information of the node do not frequently change, the information does not need to be periodically and frequently sent, and an event trigger manner may be used to report information when a node joins in the network for the first time or when another node actively requests to obtain information.

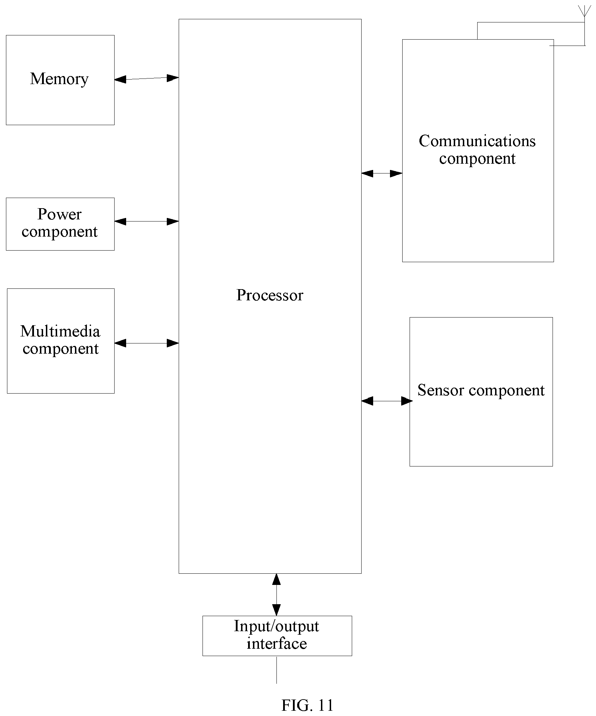

Further, the present invention further provides a fog computing-oriented node device. As shown in FIG. 11, each node device participating in fog computing includes at least a processor and a memory, and may further include a communications component, a sensor component, a power component, a multimedia component, and an input/output interface according to an actual requirement. The memory, the communications component, the sensor component, the power component, the multimedia component, and the input/output interface may all be connected to the processor. As described above, the memory in the node device may be an SRAM, an EEPROM, an EPROM, a PROM, a ROM, a magnetic memory, or a flash memory, and the processor may be a CPU, a GPU, an FPGA, an ASIC, and a DSP chip. Another communications component, sensor component, power component, multimedia component, and the like may all be implemented by using universal components, and details are not described herein.

In an embodiment of present invention, a fog computing system includes a plurality of low layer nodes and at least one high layer management node. The processor of the node device reads configuration information of the processor, and generates information about a node computing capability. In a centralized system architecture, the information about the node computing capability may be generated by a low layer node or a high layer management node. The high layer management node receives information about a node computing capability of a low layer node. When the high layer management node generates information about a node computing capability, the high layer management node also serves as a "low layer node" and reports its computing capability to a management node at a higher layer. In a distributed system architecture, the information about the node computing capability is generated and received by nodes at a same logical layer, which may both be low layer nodes or high layer management nodes.

According to another aspect, in the node device receiving information about a node computing capability, the processor reads a computer program in the memory, to perform the following operations: reading information about a node computing capability that is from another node device; multiplying a quantity of computing units and a frequency of each processor, and floating-point operations performed by each computing unit per cycle (in practice, the present invention is not limited to a multiplication manner, and another manner may be used for combination), to obtain peak floating-point operations of the processor, and using the peak floating-point operations as the node computing capability of the another device; and correspondingly storing the node computing capability and an ID of the another node device. In an optional solution, the node device may multiply the quantity of computing units and the frequency of each processor, floating-point operations performed by each computing unit per cycle, and computing resource usage (in practice, the present invention is not limited to a multiplication manner, and another manner may be used for combination), to obtain the node computing capability of the another node device.

Compared with the prior art, in the present invention, key parameters affecting a computing capability are further explored, and therefore, a computing capability of a node can be described more accurately. After these key parameters are obtained, a computing type and a scale of data that are suitable for being processed by the node can be better determined, and a delay and costs that are needed by the node to execute a computing task can be better pre-estimated, so as to further assist in computing task allocation between nodes. The present invention is especially applicable to a heterogeneous hierarchical architecture of fog computing, and is expected to be further standardized.

The foregoing describes in detail the fog computing-oriented method for describing a node computing capability, the fog computing-oriented method for exchanging a node computing capability, and the device of same that are provided in the present invention. Any obvious modification made by a person of ordinary skill in the art without departing from the essence and spirit of the present invention will infringe the patent right of the present invention and shall bear corresponding legal responsibilities.

## Claims

1. A fog computing-oriented method for describing a node computing capability, wherein a node computing capability is described by using the following information:
first information is a processor type;
second information is a quantity of computing units;
third information is a frequency; and
fourth information is floating-point operations performed by each computing unit per cycle.

2. The method for describing a node computing capability according to claim 1, wherein
the fourth information comprises information about a quantity of multiplier-accumulators of each computing unit and information about floating-point operations performed by each multiplier-accumulator per cycle.

3. The method for describing a node computing capability according to claim 1, wherein information about the node computing capability further comprises information about computing resource usage.

4. The method for describing a node computing capability according to claim 1, wherein
when the processor type is a central processing unit (CPU), the quantity of computing units is a quantity of CPU cores, and a quantity of multiplier-accumulators is a quantity of fused multiply-adds (FMAs);
when the processor type is a graphics processing unit (GPU), the quantity of computing units is a quantity of stream processors, and a quantity of multiplier-accumulators is a quantity of multiplication and addition units;
when the processor type is a field programmable gate array (FPGA) or an application-specific integrated circuit (ASIC), the quantity of computing units is a quantity of digital signal processing units, and a quantity of multiplier-accumulators is a quantity of multiplication and addition units; or
when the processor type is a digital signal processor (DSP), the quantity of computing units is a quantity of DSP cores, and a quantity of multiplier-accumulators is quantities of summators and multipliers.

5. A fog computing-oriented method for exchanging a node computing capability, wherein
when a fog computing system has a centralized system architecture and comprises a plurality of low layer nodes and at least one high layer management node,
the low layer node sends information about a node computing capability to the high layer management node or another one of the low layer nodes, and
the high layer management node receives the information about the node computing capability, and computes a computing capability of the low layer node according to the information about the node computing capability, so as to allocate a computing task; or
when a fog computing system has a distributed system architecture and comprises only a plurality of nodes located at a same logical layer,
the nodes exchange corresponding information about a node computing capability in a request-response manner or in a broadcast manner, so as to allocate a computing task.

6. The method for exchanging a node computing capability according to claim 5, wherein
the information about the node computing capability comprises: a processor type, a quantity of computing units, a frequency, and floating-point operations performed by each computing unit per cycle.

7. The method for exchanging a node computing capability according to claim 6, wherein
the high layer management node multiplies the quantity of computing units and the frequency of each processor, and the floating-point operations performed by each computing unit per cycle, to obtain peak floating-point operations of the processor.

8. The method for exchanging a node computing capability according to claim 7, wherein
the floating-point operations performed by each computing unit per cycle comprise information about a quantity of multiplier-accumulators of each computing unit and information about floating-point operations performed by each multiplier-accumulator per cycle.

9. The method for exchanging a node computing capability according to claim 6, wherein
the information about the node computing capability further comprises information about computing resource usage.

10. The method for exchanging a node computing capability according to claim 5, wherein
the low layer node broadcasts the information about the node computing capability to a low layer node that is located at a same logical layer as the low layer node.

11. A fog computing-oriented node device, comprising a processor and a memory, wherein the processor reads a computer program in the memory, to perform the following operations:
reading information about a node computing capability that is from another node device, wherein the information about the node computing capability comprises: a processor type, a quantity of computing units, a frequency, and floating-point operations performed by each computing unit per cycle;
combining the quantity of computing units and the frequency of each processor, and the floating-point operations performed by each computing unit per cycle, into the node computing capability of the another node device; and
correspondingly storing the node computing capability and an identifier (ID) of the another node device.

12. The node device according to claim 11, wherein
the information about the node computing capability further comprises computing resource usage, and
the node device combines the quantity of computing units and the frequency of each processor, the floating-point operations performed by each computing unit per cycle, and the computing resource usage, into the node computing capability of the another node device.

13. The node device according to claim 11, wherein
the node device obtains the information about the node computing capability of the another node device in a request-response manner.

14. The node device according to claim 11, wherein
the node device obtains the information about the node computing capability of the another node device in a broadcast manner.
